Europäisches Patentamt

European Patent Office

Office européen des brevets

(19)

(11) Veröffentlichungsnummer: **0 134 994**
**B1**

(12) **EUROPÄISCHE PATENTSCHRIFT**

(45) Veröffentlichungstag der Patentschrift:
28.10.87

(21) Anmeldenummer: **84108066.6**

(22) Anmeldetag: **10.07.84**

(51) Int. Cl.⁴: **G 11 B 5/702**

(54) **Verfahren zur Herstellung von magnetischen Aufzeichnungsträgern mit Rückschicht.**

(30) Priorität: **15.07.83 DE 3325556**

(43) Veröffentlichungstag der Anmeldung:
**27.03.85 Patentblatt 85/13**

(45) Bekanntmachung des Hinweises auf die Patenterteilung:
**28.10.87 Patentblatt 87/44**

(84) Benannte Vertragsstaaten:
**DE FR GB NL**

(56) Entgegenhaltungen:
**CH - A - 417 689**
**DE - A - 2 222 799**
**DE - A - 2 533 850**
**DE - A - 3 100 456**
**DE - A - 3 208 865**
**GB - A - 2 108 973**

**Neweil & Zeronian "Cellulose Chemistry and its Applications", Ellis Horwood Ltd., GB,1985, Seite 203**
**Firmenschrift der Firma Wolff Walsrode AG, 3030 Walsrode, DE, "Walsroder Collodiumwolle", 1970, Seiten 67-71, 102, 103**

(73) Patentinhaber: **BASF Aktiengesellschaft,**
**Carl-Bosch-Strasse 38, D-6700 Ludwigshafen (DE)**

(72) Erfinder: **Roller, Hermann, Schwedlerstrasse 118,**
**D-6700 Ludwigshafen (DE)**
Erfinder: **Lehner, August, Wachenheimer Strasse 4,**
**D-6701 Roedersheim-Gronau (DE)**
Erfinder: **Hack, Joachim, Pfarrer-Friedrich-Strasse 34,**
**D-6700 Ludwigshafen (DE)**
Erfinder: **Grau, Werner, Dr., Tuchbleiche 5,**
**D-6712 Bobenheim-Roxheim (DE)**
Erfinder: **Balz, Werner, Dr., Kropsburgstrasse 44,**
**D-6703 Limburgerhof (DE)**
Erfinder: **Baur, Reinhold, Dr., Eschbachstrasse 1,**
**D-7601 Ortenberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von magnetischen Aufzeichnungsträgern mit einer Rückschicht geringer Schichtdicke, bestehend aus einem unmagnetischen flexiblen Trägermaterial mit einer auf der einen Seite des Trägermaterials aufgebrachten Magnetschicht aus in einem organischen Bindemittel feinverteilten magnetischen Material, durch Auftragen einer Dispersion aus feinteiligem nichtmagnetisierbaren leitfähigen und nichtleitfähigen Feststoffen und üblichen Zusatzstoffen in einer Lösung eines Polymerbindemittels in einem organischen Lösungsmittel mittels eines Messergiessers auf die der Magnetschicht gegenüberliegende Seite des Trägermaterials und anschliessendes Trocknen der Schicht.

Es ist bekannt, flexible magnetische Aufzeichnungsträger mit nichtmagnetisierbaren nichtleitfähigen und/oder leitfähigen Stoffen enthaltenden Rückbeschichtungen zu versehen.

In der US-PS 3 293 066 wird beschrieben, dass elektrostatische Aufladungen von Magnetbändern, die sich bei zur digitalen Aufzeichnung verwendeten Geräten bei Bandgeschwindigkeiten über 5 m/sec bilden können, durch Aufbringen leitfähiger Rückbeschichtungen beseitigt und dadurch Bandrückseiten verschleissfester gemacht werden können. Es ist ausserdem aus der GB-PS 1 097 661 und der US-PS 4 135 031 bekannt, durch Aufbringen von Rückschichten mit einer vorgegebenen Oberflächenrauhigkeit die Wickeleigenschaften der Bänder zu verbessern. Auch für Magnetkarten sind solche Rückbeschichtungen bekannt. Aus der DE-PS 2 500 546 ist schliesslich bekannt, dass Rückschichten auch für die Benutzung von Videobändern von Vorteil sind.

Bei letzteren wirkt sich die Rückbeschichtung vor allem im Hinblick auf das Fehlerverhalten im Spielbetrieb positiv aus. Je nach Bandtyp werden die Rückschichten dabei zwischen 0,2 µm und 5,0 µm, insbesondere 0,4–1,2 µm dick aufgetragen. Um derartig dünne Schichten zu fertigen, ist es notwendig, die durch Dispergieren von feinteiligen, nichtmagnetisierbaren leitfähigen und nicht leitfähigen Feststoffen in einem oder mehreren organischen Lösungsmitteln und Bindemitteln hergestellten Dispersionen stark zu verdünnen, d.h. die zur Fertigung von Rückschichten verwendeten Dispersionen weisen einen relativ hohen Lösungsmittelanteil auf und sind dementsprechend niedrigviskos. Zwar wird dadurch der Schrumpffaktor, das Verhältnis der Spalthöhe des Giessers zur Trockendicke der Schicht vergrössert, doch entstehen Nachteile dadurch, dass die Viskosität sehr stark abfällt und damit der Vorgang des Auftrags der Dispersion auf das Trägermaterial ausser Kontrolle gerät. Ausserdem wird die Dispersion durch einen zu grossen Lösungsmittelanteil meist instabil.

Die an sich bekannten Bindemittel wie Polyacrylate, Polyamide, Cellulosenitrate, Polyester, Polyurethane, Phenoxyharze, Mischpolymerisate aus Vinylchlorid/Acrylnitril und Copolymerisate aus Vinylchlorid, Vinylacetat und Vinylalkohol sind grösstenteils hart und spröde. Die mechanische Beanspruchung der Rückschichten erfordert jedoch eine elastische Einstellung. Deshalb werden häufig Polyurethanelastomere mit relativ spröden Polymeren, wie Phenoxyharze, Vinylchlorid, Vinylacetat-Copolymeren, Polycarbonat u.a. kombiniert. Gerade Kombinationen aus letzteren Bindemitteln sind jedoch nicht beliebig verdünnbar.

Aufgabe vorliegender Erfindung war es daher, ein Verfahren bereitzustellen, mit dem sich magnetische Aufzeichnungsträger mit Rückschichten mit besonders gleichmässiger Schichtstärke der Rückschicht durch Auftragen einer Dispersion von feinteiligen, nichtmagnetischen, leitfähigen und nichtleitfähigem Material in Lösungen von Polymerbindemitteln insbesondere mit Hilfe eines Messergiessers auf das Trägermaterial ohne die vorgenannten Nachteile herstellen lassen. Zudem muss die Rückschicht trotz ihrer geringen Schichtstärke homogen und mechanisch sehr stabil sein. Die mechanischen Eigenschaften dieser sehr dünnen Schichten müssen den Anforderungen, die durch die moderne Aufzeichnungstechnik gestellt werden, gerecht werden.

Es wurde nun gefunden, dass sich nichtmagnetische leitfähige bzw. nicht leitfähige Rückschichten aufgabengemäss auch in einer Schichtdicke von ≤ 1 µm, durch schichtförmiges Auftragen einer Dispersion mit einem Schrumpffaktor von grösser 10, erhalten durch gleichmässiges Verteilen von feinteiligem nichtmagnetisierbaren leitfähigen und nichtleitfähigen Feststoffen und üblichen Zusatzstoffen in einer Lösung eines Polymerbindemittels in einem organischen Lösungsmittel mittels eines Messergiessers auf die der Magnetschicht gegenüberliegenden Seite des Trägermaterials und anschliessendes Trocknen der Schicht herstellen lassen, wenn die Dispersion bei einem Verhältnis von nichtmagnetisierbarem Feststoff zu organischem Lösungsmittel von mindestens 1:25 neben dem Polymerbindemittel 3 bis 30 Gew.-%, bezogen auf den Anteil des Polymerbindemittels, Nitrocellulose oder deren hochmolekulare Umsetzungsprodukte mit einem K-Wert zwischen 100 und 200 enthält, so dass die Viskosität zwischen 15 und 200 mPa.s beträgt.

Die hierfür geeignete Nitrocellulose oder deren hochmolekulare Umsetzungsprodukte, wie mit Di- oder Polyisocyanaten umgesetzte Celluloseacetobutyrate, Celluloseacetate, Cellulosepropionate weisen einen K-Wert zwischen 100 und 200 auf. Bei der Reaktion mit den Di- und/oder Polyisocyanaten erfolgt die Molekülvergrösserung durch Querverbindungen über die OH-Gruppen der Cellulosemoleküle.

Die entsprechend dem erfindungsgemässen Verfahren der Dispersion zugesetzten hochmolekularen organischen Verbindungen kommen in der angegebenen Menge, vorzugsweise in einer Menge von 5 bis 20 Gew.-%, bezogen auf den Anteil des Polymerbindemittels in der Dispersion, zur Anwendung.

Die Bindemittel werden ebenfalls aus den an sich für die Herstellung von magnetischen Aufzeichnungsträger bekannten ausgewählt. Dies sind ein in üblichen Lösungsmitteln lösliches Copolyamid, ein Polyvinylformal, ein Polyurethanelastomeres, Mischungen von Polyisocyanaten und höhermolekularen Polyhydroxylverbindungen oder Vinylchloridpolymerisate mit über 60% an Vinylchlorid-Molekülbausteinen, z.B. ein Vinylchloridcopolymerisat mit einem oder mehreren Comonomeren, die ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomeren oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von einem oder mehreren Polyurethanelastomeren mit Polyvinylformalen, Phenoxyharzen und Vinylchlorid-Copolymerisaten der oben angegebenen Zusammensetzung. Bevorzugte Bindemittel sind Polyurethanelastomere mit einem K-Wert (1% in DMF) bis 75, wie sie u.a. in den DE-ASen 1 106 955 und 2 753 694 und der DE-OS 2 442 762 beschrieben sind, ebenso wie Polyvinylformal-Binder, die in bekannter Weise durch Hydrolyse eines Polymerisates eines Vinylesters und ausschliessende Umsetzung des Vinylalkohol-Polymeren mit Formaldehyd hergestellt werden. Sie haben zweckmässig einen Vinylformalgruppengehalt von mindestens 65 Gew.-% und insbesondere mindestens 80 Gew.-%. Recht geeignete Polyvinylformale haben einen Gehalt an Vinylalkohol-Gruppen von 5 bis 13 Gew.-%, einen Gehalt an Vinylacetat-Gruppen von 7 bis 15 Gew.-%, einen Gehalt an Vinylformal-Gruppen von 80 bis 88 Gew.-%, ein spezifisches Gewicht von ca. 1,2 und einen K-Wert (1% in DMF) von $60 \pm 5$. In gleicher Weise sind auch Mischungen, insbesondere der beiden letztgenannten Bindemittel sehr gut geeignet.

Als Lösungsmittel für die Herstellung und Verarbeitung der Polymeren werden vorzugsweise cyclische Ether, wie Tetrahydrofuran und Dioxan und Ketone, wie Methylethylketon, Cyclohexanon, verwendet. Selbstverständlich können die Polyurethane auch in anderen stark polaren Lösungsmitteln, wie Dimethylformamid, Pyrrolidon, Dimethylsulfoxid oder Ethylenglykolacetat gelöst werden. Ebenso ist es möglich, die genannten Lösungsmittel mit Aromaten, wie Toluol oder Xylol und Estern, wie Ethyl- oder Butylacetat, zu mischen.

Zur Dispersionsherstellung werden zweckmässigerweise Dispergierhilfsmittel, wie Fettsäuren der allgemeinen Formel $R^1-COOH$, worin $R^1$ lineare oder verzweigte Alkyl- bzw. Alkylengruppen mit 10 bis 22 Kohlenstoffatomen bedeutet, Salze der Metalle aus der ersten bis dritten Hauptgruppe des Periodensystems der Elemente mit den genannten Carbonsäuren, oder Lecithin verwendet. Dabei hat sich ein Zusatz von 2 bis 3 Gew.-%, bezogen auf das Pigment, bewährt.

Geeignete Gleitmittel zur Einstellung der Friktionseigenschaften sind die üblichen Produkte, wie Fettsäureester aus Mono- und Dicarbonsäuren, Fettsäureamide oder Silikonöle. Ein Zusatz von etwa 1 Gew.-%, bezogen auf das Bindemittel, ist zweckmässig.

Zur Einstellung der Rückgussrauhigkeit und zur Verstärkung der Rückschicht werden als Füllstoffe Zinkoxid, Titandioxid, $\alpha$-Fe$_2$O$_3$, Calciumkarbonat, Bariumsulfat, Korund, Chromtrioxid, Silikate u.a. eingesetzt. Auch hat es sich als vorteilhaft erwiesen, je nach Anwendung, z.B. im Audio- bzw. Videobereich, entweder eine organisch ausgerüstete Kieselsäure mit einer mittleren Agglomeratenteilchengrösse von etwa 4 µm oder einer gefällten Kieselsäure mit einer mittleren Sekundarteilchengrösse von etwa 3 µm zusammen mit einem kubischen Zinkferrit einzusetzen. Das Bindemittel:Pigmentverhältnis der Rückschicht kann von 1:1 bis 4:1, vorzugsweise 1,5:1 bis 2,5:1 variieren. Der in der Schicht verwendete leitfähige Russ ist beispielsweise ein Ölofenruss mit einer spezifischen Oberfläche von etwa 200 m$^2$/g und einer Olzahl von 185 ml/100 g, der Kohlenstoffgehalt liegt bei 98 Gew.-%. In gleicher Weise können auch Russe mit grösserer, bis 1000 m$^2$/g, oder kleinerer Oberfläche, bis 100 m$^2$/g, sowie Abmischungen davon eingesetzt werden. Werden Bindemittel oder Bindemittelmischungen verwendet, denen vor dem oder beim Auftragen der Rückschichtdispersion auf die Träger noch reaktive Polyisocyanate zugesetzt wurden, so hat gegebenenfalls eine Temperung der Rückschicht Vorteile in bezug auf den Dauerlauf. Die Härtung kann insbesondere durch Zumischen von Polyisocyanat, vorzugsweise von Di- oder Triisocyanatodiphenylmethan und 1 Mol eines Triols, wie Glycerin oder 1,1,1-Trimethylolpropan, insbesondere dem Reaktionsprodukt aus 3 Mol Toluylendiisocyanat und 1 Mol 1,1,1-Trimethylolpropan, bevorzugt zur fertigen Dispersion vor dem Auftragen auf den Träger erfolgen, wodurch die Thermoplastizität verringert und die Abriebfestigkeit noch weiter verbessert werden. Die Menge der dafür zugesetzten Polyisocyanate beträgt im allgemeinen etwa 10 bis 40 Gewichtsprozent, bezogen auf die Gesamtmenge des Bindemittels. Die Vernetzungsreaktion wird zweckmässigerweise durch den Zusatz von Katalysatoren beschleunigt. Beispielsweise durch Zusatz tertiärer Amine, wie Triethylamin, Triethylendiamin, N-Methyl-pyridin und N-Methyl-morpholin, Metallsalze, wie Kaliumacetat und Zinkstearat und organische Metallverbindungen, wie Dibutylzinndilaurat.

In einer vorteilhaften Zusammensetzung besteht die 0,2 bis 5,0 µm dicke Rückschicht aus 20 bis 35, vorzugsweise 20 bis 30 Gew.-% eines leitfähigen Russes, 5 bis 15, vorzugsweise 8 bis 12 Gew.-% einer pyrogenen oder gefällten Kieselsäure, 2 bis 8, vorzugsweise 3 bis 6 Gew.-% eines kubischen Zinkferrits, 0,5 bis 5, vorzugsweise 1 bis 3 Gew.-% einer langkettigen Carbonsäure mit 10 bis 22 Kohlenstoffatomen und 30 bis 50, vorzugsweise 35 bis 45 Gew.-% des polymeren Bindemittelgemisches sowie gegebenenfalls 10 bis 40, vorzugsweise 20 bis 40 Gew.-% eines Polyisocyanatharzes.

Die Dispersionsherstellung erfolgt in Kugelmühlen, vertikalen oder horizontalen Rührwerkskugelmühlen auf üblichem Weg. Der Rückguss wird bevorzugt mit dem Giesserlineal aufgebracht. Zur Verdampfung der Lösungsmittel und Trocknung bzw. Härtung der Rückschicht wird diese durch einen Wärmekanal geführt. Dabei ist es möglich, sowohl Magnet- und Rückgussdispersionen in einem Arbeitsgang als auch hintereinander aufzutragen, d.h. zuerst die Magnet- und dann die Rückschicht oder umgekehrt. Die beschichteten Folien können noch, falls erforderlich, auf üblichen Maschinen durch Hindurchführen zwischen geheizten und polierten Walzen, gegebenenfalls bei Anwendung von Druck und Temperaturen von 50 bis 100 °C, vorzugsweise 60 bis 80 °C, geglättet und verdichtet werden. Die Dicke der Rückschicht beträgt weniger als 5 µm, vorzugsweise 0,4 bis 1,4 µm.

Mit dem erfindungsgemässen Verfahren wird die Herstellung dünner gleichmässiger Rückschichten mit ≤ 1 µm Schichtstärke und mit dennoch geringen Schichtdickenschwankungen ermöglicht. Es hat sich gezeigt, dass Dispersionen, die hierbei eine Viskosität von 15 bis 200 mPa.s, bevorzugt 20 bis 50 mPa.s aufweisen, besonders geeignet sind und dabei das Pigment/Lösungsmittel-Verhältnis mindestens 1:25 beträgt. Sehr vorteilhaft sind Feststoff/Lösungsmittel-Verhältnisse, die oberhalb von 1:30 oder sogar 1:36 liegen und bis zu einer Obergrenze von 1:40 reichen können. Von besonderem Vorteil ist, dass mit dem erfindungsgemässen Verfahren Rückschichten bei der Beschichtung des flexiblen Trägermaterials mittels des Messergiessers erhalten werden, deren Schrumpffaktoren, das ist das Verhältnis von Spalthöhe des Giessers zu Trockendicke der Rückschicht, grösser 10, vorzugsweise 15 bis 35 sind.

Die erfindungsgemäss hergestellten flexiblen magnetischen Aufzeichnungsträger mit Rückschicht zeichnen sich gegenüber denen nach dem Stand der Technik vor allem darin aus, dass sich die Rückschichtdispersionen in den genannten sehr dünnen Schichten herstellen lassen und die Fehlerzahl entsprechend gefertigter Videobänder stark reduziert wird.

Die Erfindung sei anhand folgender Beispiele im Vergleich zu Versuchen nach dem Stand der Technik näher erläutert. Die in den Beispielen und Vergleichsversuchen genannten Teile und Prozente beziehen sich, soweit nicht anders angegeben ist, auf das Gewicht.

Beispiel 1

In einer Kugelmühle von 6000 Volumenteilen wurden 8000 Teile Stahlkugeln mit einem Durchmesser von 4–6 mm, 90 Teile eines leitfähigen Russes mit einer spezifischen Oberfläche 200 m²/g, 45 Teile einer organisch ausgerüsteten Kieselsäure mit einer mittleren Agglomeratengrösse von 4 µm, 15 Teile eines kubischen Zinkferrits, 3 Teile Stearinsäure, 420 Teile Tetrahydrofuran, 219 Teile einer 13%igen Lösung eines linearen Polyesterurethanharzes, hergestellt aus Adipinsäure, Butandiol-1,4 und 4,4'-Diisocyanatodiphenylmethan, in Tetrahydrofuran, 234,4 Teile einer 8%igen Nitrocelluloselösung mit einem K-Wert von 110 in Tetrahydrofuran, eingewogen. Dann wurde die Kugelmühle verschlossen und der Ansatz 4 Tage lang gemahlen. Zur Ermittlung der rheologischen Daten wurde der Mühle eine Dispersionsprobe entnommen. Die Viskosität betrug 374 mPa.s, die Fliessgrenze 40,5 Pa. Anschliessend wurde die Kugelmühle wieder geöffnet und noch 834,4 Teile der 13%igen Lösung des zuvor beschriebenen linearen Polyesterurethanharzes in Tetrahydrofuran, 171,2 Teile einer 20%igen Lösung eines Polyphenoxyharzes aus Bisphenol A und Epichlorhydrin mit 6 Gew.-% Hydroxylgruppen in Tetrahydrofuran, 30 Teile einer 0,1%igen Silikonöllösung in Tetrahydrofuran, sowie nochmals 627 Teile Tetrahydrofuran zugegeben und weitere 24 Stunden gemahlen.

Die Dispersion wurde nun aus der Mühle entnommen und auf eine Verarbeitungsviskosität von 22 mPa.s eingestellt. Hierzu wurden zu 1000 Teilen der Dispersion 600 Teile Tetrahydrofuran, sowie um die Schicht nach Auftrag zu vernetzen, 95,8 Teile einer 50%igen Lösung eines Isocyanatharzes aus 1 Mol Trimethylolpropan und 3 Molen Toluylendiisocyanat in Ethylacetat, 15 Minuten lang zugerührt. Nach Filtration durch ein Papierfilter wurde die Dispersion mittels eines Giesserlineals auf eine 15 µm Polyethylenterephthalatfolie aufgebracht und im Trockenkanal der Beschichtungsmaschine getrocknet. Die erzielte Rückschichtdicke betrug bei einer Giessspalthöhe von 15 µm 0,9 µm. Der Schrumpffaktor beträgt somit 16,6. Die Rückschicht war sehr gleichmässig und ohne jegliche Streifenbildung aufgetragen. Zur weiteren Verarbeitung wurde anschliessend die Magnetschicht in herkömmlicher Weise auf die der Rückschicht gegenüberliegenden Folienseite aufgetragen. Nach Kalandrierung wird der Block in 12,7 mm breite (1/2 Zoll) Bänder aufgeschnitten. Die Fehlerrate der Bänder wird im nachfolgenden auf einem VHS-Recorder festgestellt. Dazu wird die Anzahl der Pegeleinbrüche von 20 dB mit einer Dauer von mehr als 15 µs pro Minute bestimmt. Das Ergebnis ist in der Tabelle angegeben.

Beispiel 2

Es wurde wie in Beispiel 1 beschrieben verfahren, jedoch wurde anstelle der 8%igen Nitrocelluloselösung vom K-Wert 110 eine 5%ige Nitrocelluloselösung mit dem K-Wert 130 eingesetzt. Diese Dispersion hatte eine Viskosität von 713 mPa.s und eine Fliessgrenze von 45,9 Pa. Nach beendeter Dispergierung wurde die Rückschichtdispersion auf eine Verarbeitungsviskosität von 20 mPa.s eingestellt. Hierzu wurden 1000 Teile der Dispersion mit 750 Teilen Tetrahydrofuran verdünnt und mit 90,8 Teilen der 50%igen Isocyanatharzlösung gemäss Beispiel 1 zugesetzt. Die Rückschichtdispersion wurde mit dem Giesserlineal aufgetragen. Bei einer Giessspalthöhe von 15 μm wurde eine Trockenschichtdicke von 0,6 μm erreicht. Der Schrumpffaktor betrug somit 25. Die Rückschicht ist wieder sehr gleichmässig aufgetragen. Magnetschichtauftrag und Aufarbeitung erfolgte wie bei Beispiel 1 beschrieben. Das Ergebnis ist in der Tabelle angegeben.

Beispiel 3

Es wurde wie in Beispiel 1 beschrieben vorgegangen. Abweichend von Beispiel 1 wurden 96,2 Teile der 13%igen Lösung des linearen Polyesterurethanharzes, 122,6 Teile einer 13%igen Lösung eines Polyvinylformalharzes mit dem K-Wert von 70, 375 Teile der 5%igen Nitrocellulose mit dem K-Wert von 130, sowie 428,4 Teile Tetrahydrofuran eingewogen und 4 Tage gemahlen. Die Viskosität betrugt 729 mPa.s, die Fliessgrenze 39,9 Pa. Anschliessend wurde der Ansatz mit 869,2 Teilen des 13%ig gelösten Polyesterurethanharzes, 156,9 Teile der 20%igen Lösung des Polyphenoxyharzes, 30 Teilen der 0,1%igen Silikonöllösung in Tetrahydrofuran, sowie 608,3 Teilen Tetrahydrofuran aufgelackt und abermals 24 Stunden gemahlen. Nach beendeter Dispergierung wurde die Rückgussdispersion auf eine Verarbeitungsviskosität von 22,5 mPa.s gebracht. Hierzu wurden 1000 Teile Dispersion mit 1000 Teilen THF verdünnt und mit 89,6 Teilen der zuvor beschriebenen Isocyanatharzlösung versetzt. Der Rückgussauftrag erfolgte mit dem Giesserlineal. Bei einer Giessspalthöhe von 20 μm wurde eine Trockenschichtdicke von 0,7 μm erreicht, was einem Schrumpffaktor von 28,5 entspricht. Die Rückschicht ist sehr homogen aufgetragen. Magnetschichtauftrag und Aufarbeitung erfolgte wie bei Beispiel 1. Das Ergebnis ist in der Tabelle angegeben.

Vergleichsversuch 1

In Anlehnung an Beispiel 1 wurde mit den aus der DE-PS 2 500 546 bekannten Bindemitteln, einem linearen Polyesterurethan aus Adipinsäure, Butandiol-1,4 und 4,4′–Diisocyanatodiphenylmethan und einem Polyphenoxyharz aus Bisphenol A und Epichlorhydrin sowie mit den im Beispiel 1 angegebenen Zusatzstoffen und in derselben Pigmentzusammensetzung eine Dispersion hergestellt. Des weiteren wurden 363 Teile der 13%igen Lösung des linearen Polyesterurethanharzes sowie 360 Teile Tetrahydrofuran zugesetzt. Anschliessend wurde 4 Tage gemahlen. Die Viskosität der resultierenden Dispersion betrug 105,4 mPa.s, die Fliessgrenze 51,4 Pa. Danach wurden 187,7 Teile der 13%igen Lösung des linearen Polyesterurethanharzes, 187,7 Teile der 20%igen Lösung des Polyphenoxyharzes, 30 Teile der 0,1%igen Silikonöllösung in Tetrahydrofuran und 650 Teile Tetrahydrofuran zugegeben und nochmals 24 Stunden gemahlen. Nach Abschluss der Dispergierung wurde die Rückschichtdispersion auf eine Verarbeitungsviskosität von 19 mPa.s gebracht. Hierzu wurden 1000 Teile Dispersion mit 500 Teilen THF verdünnt und mit 103 Teilen der in Beispiel 1 beschriebenen Isocyanatharzlösung versetzt. Der Rückgussauftrag erfolgte mit dem Giesserlineal. Bei einer Giessspalthöhe von 10 μm wurde eine Trockenschichtdicke von 1,1 μm erreicht, was einem Schrumpffaktor von 9 entspricht. Infolge der geringen Giessspalthöhe sammelte sich unter dem Giesserlineal Folienstaub an, der zu einer starken Streifenbildung und stellenweise unbeschichteter Folie führte. Der Magnetschichtauftrag und die Aufarbeitung des Blockmaterials wurde wie in den vorstehenden Beispielen beschrieben vorgenommen.

Aus Vergleichsgründen wurde die Fehlerrate an einem ausgesuchten Folienstück gemessen. Das Ergebnis ist in der Tabelle angegeben.

Vergleichsversuch 2

Wie in Beispiel 1 angegeben wurde eine Polyethylenterephthalatfolie jedoch ohne Auftrag einer Rückschicht mit der Magnetschicht versehen und entsprechend geprüft. Das Ergebnis ist in der Tabelle angegeben.

Tabelle

|  | Schrumpf-faktor | Fehler-rate |
|---|---|---|
| Beispiel 1 | 16 | 10 |
| Beispiel 2 | 25 | 8 |
| Beispiel 3 | 28,5 | 5 |
| Vgl. Vers. 1 | 9 | 20 |
| Vgl. Vers.2 | – | 50 |

**Patentansprüche**

1. Verfahren zur Herstellung von magnetischen Aufzeichnungsträgern, bestehend aus einem unmagnetischen flexiblen Trägermaterial mit einer auf der einen Seite des Trägermaterials aufgebrachten Magnetschicht aus in einem organischen Bindemittel feinverteilten magnetischen Material sowie einer auf der der Magnetschicht gegenüberliegenden Seite des Trägermaterials befindlichen Rückschicht mit einer Schichtdicke von ≤ 1 μm, durch schichtförmiges Auftragen einer Dispersion mit einem Schrumpffaktor von grösser 10, erhalten durch gleichmässiges Verteilen von feinteiligem nichtmagnetisierbaren leitfähigen und nichtleitfähigen Feststoffen und üblichen Zusatzstoffen in einer Lösung eines Polymerbindemittels in einem organischen Lösungsmittel mittels eines Messergiessers auf die der Magnetschicht gegenüberliegenden Seite des Trägermaterials und anschliessendes Trocknen der Schicht, dadurch gekennzeichnet, dass die Dispersion bei einem Verhältnis von nichtmagnetisierbarem Feststoff zu organischem Lösungsmittel von mindestens 1:25 neben dem Polymerbindemittel 3 bis 30 Gew.-%, bezogen auf den Anteil des Polymerbindemittels, Nitrocellulose oder deren hochmolekulare Umsetzungsprodukte mit einem K-Wert zwischen 100 und 200 enthält, so dass die Viskosität zwischen 15 und 200 mPa.s beträgt.

2. Verfahren gemäss Anspruch 1, dadurch gekennzeichnet, dass das Verhältnis von nichtmagnetisierbarem Feststoff zu organischem Lösungsmittel 1:25 bis 1:36 beträgt.

3. Verfahren gemäss einem der Ansprüche 1 oder 2, dadurch gekennzeichnet, dass die Viskosität 20 bis 50 mPa.s beträgt.

4. Verfahren gemäss einem der Ansprüche 1 bis 3, dadurch gekennzeichnet, dass das hochmolekulare Umsetzungsprodukt durch Reaktion mit Di- oder Polyisocyanaten entsteht.

## Revendications

1. Procédé de fabrication de supports d'enregistrement magnétique, constitués d'un matériau support non magnétique muni d'une couche magnétique, appliquée sur l'une des faces du matériau support, en une matière magnétique, finement répartie dans un liant organique, ainsi que d'une couche arrière, d'une épaisseur de ⩽ 1 µm, située sur la face du matériau support apposée à celle de la couche magnétique, obtenue par dépôt, sous forme de couche d'une dispersion à facteur de retrait supérieur à 10, par répartition uniforme de fines particules de matières solides et additifs usuels, conducteurs et non conducteurs, non magnétisables, dans une solution d'un liant polymère dans un solvant organique, au moyen d'une coulée à la racle sur la face du matériau support opposée à celle de la couche magnétique, puis séchage de la couche, caractérisé par le fait que la dispersion, avec un rapport de matière solide non magnétisable au solvant organique de moins de 1/25, contient, outre le liant polymère, 3 à 30% en poids, rapporté à la partie de liant polymère, de nitrocellulose, ou de ses produits de réaction à poids moléculaire élevé, d'un indice K compris entre 100 et 200, de manière que la viscosité soit comprise entre 15 et 200 mPa.s.

2. Procédé selon la revendication 1, caractérisé par le fait que le rapport entre matière solide non magnétisable et solvant organique est compris entre 1/25 et 1/36.

3. Procédé selon l'une des revendications 1 ou 2, caractérisé par le fait que la viscosité est comprise entre 20 et 50 mPa.s.

4. Procédé selon l'une des revendications 1 à 3, caractérisé par le fait que le produit de réaction à poids moléculaire élevé est obtenu par réaction avec des di- ou polyisocyanates.

## Claims

1. A process for the production of a magnetic recording medium, comprising a non-magnetic flexible base having, applied to one side of said base, a magnetic coating consisting of magnetic material finely dispersed in an organic binder and, on the side of the base opposite the magnetic coating, a backing coating having a thickness of ⩽ 1 µm, by applying a layer of a dispersion having a shrinkage factor greater than 10, said dispersion having been obtained by uniformly dispersing finely divided non-magnetizable conductive and non-conductive solids and conventional additives in a solution of a polymeric binder in an organic solvent, to the side of the base opposite the magnetic coating by means of a knife coater, and then drying the layer, wherein the dispersion, at a ratio of non-magnetizable solids to organic solvent of at least 1:25, contains, in addition to the polymeric binder, from 3 to 30% by weight, based on the content of polymeric binder, of nitrocellulose or a high molecular weight reaction product thereof having a K value of from 100 to 200, so that the viscosity is from 15 to 200 mPa.s.

2. A process as claimed in claim 1, wherein the ratio of non-magnetizable solids to organic solvent is from 1:25 to 1:36.

3. A process as claimed in claim 1 or 2, wherein the viscosity is from 20 to 50 mPa.s.

4. A process as claimed in any of claims 1 to 3, wherein the high molecular weight reaction product is formed by reaction with a diisocyanate or polyisocyanate.